# EUROPÄISCHE PATENTSCHRIFT

(11) **EP 1 374 162 B1**
(45) Veröffentlichungstag und Bekanntmachung des Hinweises auf die Patenterteilung: **28.07.2004**
(21) Anmeldenummer: 02719972.8
(22) Anmeldetag: 28.02.2002
(51) Int. Cl.: G06K 19/077

(54) **VERFAHREN ZUR HERSTELLUNG EINES MODULS**
METHOD OF PRODUCING A MODULE
PROCEDE POUR FABRIQUER UN MODULE

(30) Priorität: 01.03.2001 DE 10109993
(43) Veröffentlichungstag der Anmeldung: 02.01.2004
(73) Patentinhaber: Giesecke & Devrient GmbH, 81677 München (DE)
(72) Erfinder: HAGHIRI, Yahya DI, deceased (IR); BARAK, Renée-Lucia, 82008 Unterhaching (DE); RIEDL, Josef, 85395 Attenkirchen (DE)
(74) Vertreter: Klunker . Schmitt-Nilson . Hirsch
(86) Internationale Anmeldenummer: PCT/EP2002/002185
(87) Internationale Veröffentlichungsnummer: WO 2002/071329

(56) Entgegenhaltungen:
- EP-A- 0 359 632
- EP-A- 0 521 502
- EP-A- 1 033 677
- DE-A- 19 731 737
- US-A- 5 851 854

## Beschreibung

Die Erfindung betrifft ein Verfahren zur Herstellung eines Moduls zum Einbau in einen Kartenkörper, wobei ein Modulträger auf einer Seite mit einer leitenden Struktur versehen wird. Die Erfindung betrifft darüber hinaus ein entsprechendes Modul sowie ein Verfahren zum Einbau eines solchen Moduls in einen Kartenkörper und eine Datenträgerkarte mit einem solchen Modul.

Eine Möglichkeit der Herstellung von Datenträgerkarten, die beispielsweise als Ausweis-, Identifikations-, Kredit- oder Buchungskarten o. ä. verwendet werden, besteht darin, ein Modul, welches den eigentlichen Datenträger enthält und welches Kontaktflächen zur Kontaktierung des Datenträgers in einer Lese- und/ oder Schreibeinrichtung aufweist, in eine dafür vorgesehene Aussparung im Kartenkörper einzusetzen. Ein solches Modul besteht im Allgemeinen aus einem "Modulträger" oder "Substrat", welcher auf der einen Seite eine leitende Struktur zur Bildung der Kontaktflächen aufweist. Auf der anderen Seite ist auf den Modulträger üblicherweise als Datenträger ein Chip aufgesetzt. Die Ein- und Ausgänge des Chips sind dabei durch den Modulträger hindurch mit den Kontaktflächen elektrisch leitend verbunden. Bei den derzeit hergestellten Modulen besteht der Modulträger üblicherweise aus Epoxidharz bzw. Kapton und neuerdings auch aus PEN. Diese Materialien lassen sich jedoch nur mittels einer Kleberschicht mit der Karte haftschlüssig verbinden. Für die Befestigung eines solchen Moduls in der Aussparung des Kartenkörpers mittels einer Kleberschicht sind die unterschiedlichsten Verfahren bekannt.

So wird in der EP 0 521 502 ein Verfahren zum Einbau eines Moduls in eine zweistufige Aussparung eines Kartenkörpers beschrieben. Dabei wird zunächst auf den Schulterbereichen der tieferen Aussparung in den Kartenkörper ein doppelseitig klebendes, ringförmiges Haftkleberelement befestigt. Anschließend wird das Modul mit den Kontaktflächen nach außen in die Aussparung eingesetzt, wobei das Modul im Randbereich mit dem im Schulterbereich der Ausnehmung angeordneten, doppelseitigen Klebeelement verklebt wird.

In der EP 0 493 738 wird ein anderes Verfahren zur Verklebung des Moduls mit dem Kartenkörper beschrieben. Dabei wird eine thermoaktivierbare Kleberschicht auf die den Kontaktflächen gegenüberliegende Unterseite des Moduls positioniert. Anschließend wird dann das Modul mit der Kleberschicht in die Aussparung des Kartenkörpers eingesetzt und unter Anwendung von Wärme und Druck verklebt.

Aus DE 197 31 737 A1 ist ein Verfahren gemäß dem Oberbegriff der unabhängigen Ansprüche bekannt, insbesondere ein Verfahren zur Herstellung eines Moduls zum Einbau in einen Kartenkörper, bei dem ein Modulträger auf einer Seite (Oberseite) mit einer leitenden Struktur versehen wird. Bei dem Verfahren wird weiter auf der Unterseite des Modulträgers, auf die später ein Chip aufgebracht wird, ein Verankerungselement aufgebracht, das aus einem Material (z.B. Aluminium) gefertigt ist, das einen zum Material des Kartenkörpers (z.B. ein Kunststoff) konträren Erweichungsparameter hat. Hierdurch wird gewährleistet, dass unter Erwärmung der Kartenkörper erweicht, das Verankerungselement hingegen fest bleibt, so dass es in einen hinterschnittenen Hohlraum des Kartenkörpers eindringen und dort stecken bleiben kann.

Aus EP 0 359 632 A1 ist ein weiteres Verfahren zur Herstellung eines Moduls zum Einbau in einen Kartenkörper bekannt, bei dem ein Modulträger auf seiner Unterseite mit Verankerungselementen versehen wird, die zur Verankerung im Kartenkörper vorgesehen sind, und die deshalb nicht erweichen dürfen.

Aus US 5,851,854 ist ein Verfahren zum Herstellen eines doppelschichtigen Datenträgers mit einem elektronischen Modul bekannt, bei dem ein Hohlraum rund um das Modul mit einem Material mit einer niedrigen Erweichungstemperatur verfüllt wird. Hierzu wird in einer Aussparung einer ersten Schicht das Modul angeordnet, so dass zwischen der ersten Schicht und dem Modul der Hohlraum verbleibt. Eine zweite Schicht wird stellenweise mit dem Material mit der niedrigen Erweichungstemperatur bedruckt. Danach werden die beiden Schichten zusammengesetzt, so dass das Material auf dem Modul zu liegen kommt. Bei einem nachfolgenden Erhitzen erweicht das Material und dringt in den Hohlraum zwischen dem Modul und der ersten Schicht ein. Hierdurch sind das Modul und die Doppelschicht miteinander verklebt.

Ein Nachteil dieser Klebeverfahren besteht darin, dass trotz aller Bemühungen, einen guten Klebstoff für die Einbettung von Modulen in den Kartenkörper zu finden, diese Verbindung immer einen Schwachpunkt darstellt. Der Grund hierfür ist darin zu sehen, dass der Kleber sowohl gegenüber dem Material des Modulträgers als auch gegenüber dem Material des Kartenkörpers einen guten Verbund eingehen muss. Da es sich jedoch immer um verschiedene Materialien handelt, muss bei der Auswahl des Klebers ein Kompromiss geschlossen werden werden.

Es ist Aufgabe der vorliegenden Erfindung, eine Alternative zu diesem genannten Stand der Technik zu schaffen.

Diese Aufgabe wird durch ein Verfahren gemäß Anspruch 1 und durch ein Modul gemäß Anspruch 9 gelöst. Die abhängigen Ansprüche enthalten besonders vorteilhafte Ausgestaltungen und Weiterbildungen der Erfindung.

Erfindungsgemäß wird bei der Herstellung des Modulträgers zumindest für eine an der der leitenden Struktur gegenüberliegenden Unterseite befindliche erste Schicht des Modulträgers ein aus thermoplastischem Kunststoff bestehendes Material verwendet, dessen Eigenschaften, die für eine bestimmte Verbindungsart, beispielsweise Thermoschweißen, mit einer Materialschicht des Kartenkörpers beim Einbau des Moduls in den Kartenkörper wesentlich sind, auf diese betreffende Materialschicht des Kartenkörpers insoweit abgestimmt sind, dass die Kunststoffe einen ähnlichen Erweichungsparameter aufweisen. Dadurch ist ein sehr einfaches und sicheres Verschweißen der Kunststoffe miteinander möglich. Das heißt, die letztlich haftende Schicht des Modulträgers wird bereits bei der Herstellung des Moduls "inline" aufgebracht, und dabei werden die Eigenschaften der verbindenden Schicht ganz gezielt auf das Kartenmaterial, mit dem die Verbindung eingegangen werden soll, und auf die Art der Verbindung abgestimmt.

Durch diese Anpassung der mit dem Kartenkörper in Verbindung kornmenden Schicht des Modulträgers auf das Material des Kartenkörpers kann also eine optimale Verbindung erreicht werden. Zudem sind damit auch kleberlose Verbindungsverfahren wie beispielsweise ein Verschweißen der Kunststoffe möglich, bei denen die Qualität der Verbindung unter anderem ganz entscheidend von den Eigenschaften der zu verbindenden Materialien abhängt. Solche kleberlosen Verbindungen sind besonders vorteilhaft, da hierbei bei der Produktion der Datenträgerkarten der zusätzliche Arbeitsschritt einer Aufbringung der Kleberschicht entfällt. Der Implantationsprozess wird dadurch kürzer, was erhebliche Kostenvorteile mit sich bringt.

Um welche Erweichungsparameter es sich bei dem Verfahren im Einzelnen handelt, hängt von der jeweiligen gewünschten Schweißtechnik ab. So wird bei Anwendung des Thermoschweißverfahrens das Material des Modulträgers so gewählt, dass die Erweichungstemperaturen der beiden Kunststoffe möglichst gleich hoch sind. Beim Ultraschallschweißen, Hochfrequenzschweißen oder Vibrationsschweißen sollten die Kunststoffe bei ähnlichen Frequenzen erweichen.

Bei einem besonders bevorzugten Ausführungsbeispiel besteht der Modulträger an der der leitenden Struktur gegenüberliegenden Unterseite aus demselben Material wie die beim Einbau mit dem Modulträger zu verbindende Materialschicht des Kartenkörpers. In diesem Fall sind die Eigenschaften nicht nur aufeinander abgestimmt, sondern sogar identisch. Es kann daher beispielsweise ein beliebiges der oben genannten Schweißverfahren zur Verbindung des Moduls mit dem Kartenkörper verwendet werden. Eine Abstimmung in dieser Art hat auch Vorteile bei der herkömmlichen Verbindungsart mittels Kleber, da hier ein Kleber gewählt werden kann, der genau auf dieses eine Material abgestimmt ist, so dass bezüglich der Kleberauswahl kein Kompromiss zwischen verschiedenen zu verbindenden Materialien eingegangen werden muss.

Im einfachsten Ausführungsbeispiel ist der Modulträger einschichtig. Das heißt, er besteht lediglich aus einer einzelnen Schicht, welche aus dem speziell gewählten Material mit den an den Kartenkörper angepassten Eigenschaften besteht.

Weiterhin kann der Modulträger aber auch zweischichtig hergestellt werden, so dass sich zwischen der ersten Schicht, welche mit dem Kartenkörper verbunden werden soll, und der leitenden Struktur eine zweite Schicht aus einem Material befindet, dessen Eigenschaften wiederum auf die Erfordernisse bei der weiteren Verarbeitung des Modulträgers, z.B. auf ein Aufbringen einer leitenden Struktur, abgestimmt sind. Für diese Schicht kann das Material beispielsweise so gewählt werden, dass das gesamte Modul eine bestimmte, für die spätere Verarbeitung notwendige mechanische Stabilität aufweist. Zweischichtige Modulträger lassen sich sehr einfach in Coextrusionstechnik herstellen.

Bei einem weiteren Ausführungsbeispiel sind diese erste und zweite Schicht über mindestens eine Verbindungsschicht, beispielsweise eine Kleberschicht, miteinander verbunden. In diesem Fall ist der Modulträger also mindestens dreischichtig. Dreischichtige Modulträger lassen sich sehr einfach als Laminatfolie erzeugen.

Vorzugsweise werden die erfindungsgemäßen Module genau wie herkömmliche Module in Form eines Endlosmodulbands hergestellt. Ein solches Modulband weist dann ein Modulträgerband auf, worauf entsprechend leitende Strukturen für mehrere entlang des Modulbands angeordnete Module aufgebracht werden. Hierbei wird die letztlich verbindende, d.h. den leitenden Strukturen gegenüberliegende Schicht des Modulträgerbands "inline" bei der Herstellung des Modulträgerbands erzeugt und somit direkt in das Modulträgerband integriert. Dieses Modulband wird dann wie ein herkömmliches, bekanntes Modulband weiterverarbeitet, d.h. es werden beispielsweise nach den üblichen Verfahren die Chips aufgebracht, die Kontaktierungen hergestellt und die Chips vergossen. Anschließend werden die einzelnen Module aus dem Modulträger herausgelöst, vorzugsweise ausgestanzt oder ausgeschnitten.

Eine solche "inline"-Erzeugung der Verbindungsschicht im Modulband ist bei einem mehrschichtigen Modulträgerband beispielsweise mittels einer Coextrusionstechnik möglich. Als Alternative kann ein solches mehrschichtiges Modulträgerband auch mittels einer Laminiertechnik, d.h. in Form eines Endloslaminat-Folienbands, hergestellt werden. Dieses Verfahren bietet sich insbesondere bei der Herstellung von Modulträgerbändern mit Verbindungsschichten zwischen den einzelnen funktionellen Materialschichten an, d.h. bei der drei- oder mehrschichtigen Version.

Die Erfindung wird im Folgenden unter Hinweis auf die beigefügten Figuren anhand von Ausführungsbeispielen näher erläutert. Es stellen dar:
Figur 1 einen schematischen Querschnitt durch ein Modulband mit einem einschichtigen Modulträgerband,
Figur 2 einen schematischen Querschnitt durch ein Modulband mit einem zweischichtigen Modulträgerband,
Figur 3 einen schematischen Querschnitt durch ein Modulband mit einem dreischichtigen Modulträgerband.

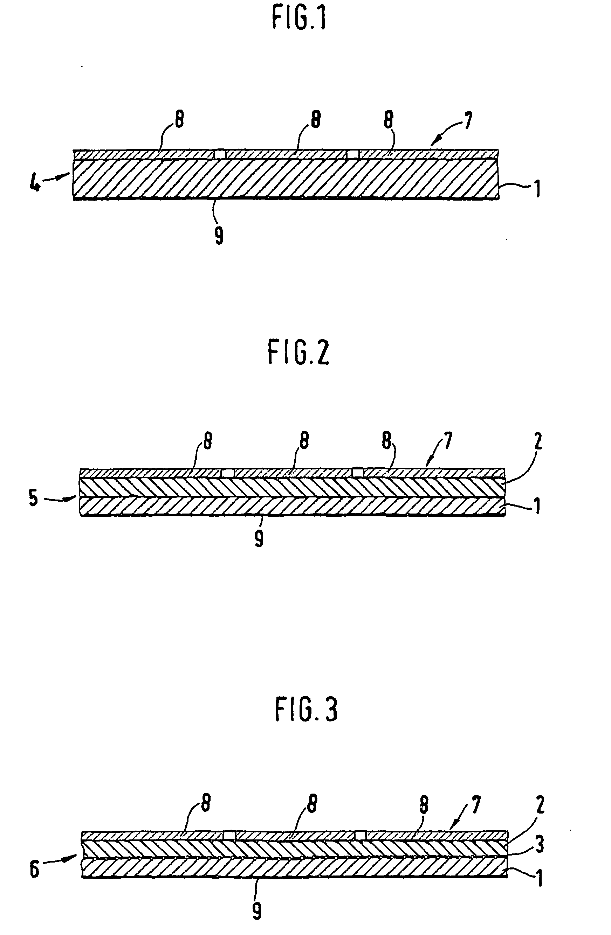

Das in Figur 1 im Querschnitt, d.h. quer zur Längsrichtung dargestellte Modulband weist ein Modulträgerband 4 mit nur einer einzigen Schicht 1 auf. Auf der Oberseite ist dieses Modulträgerband 4 mit einer leitenden Struktur 7 verbunden. Diese leitende Struktur weist mehrere Kontaktflächen 8 auf, welche später als Kontakte zum Auslesen eines Chips des Moduls mittels einer Leseeinrichtung dienen.

Die einzige Schicht 1 des Modulträgerbands 4 ist hierbei aus einem Material gewählt, das auf das Material der Kartenkörper (nicht dargestellt), in welche später die Module eingebaut werden sollen, abgestimmt ist. Inwieweit diese Abstimmung erfolgt bzw. welche Erweichungsparameter aufeinander abgestimmt werden, hängt davon ab, welche Verbindungstechnik verwendet wird. Bei dem dargestellten Ausführungsbeispiel handelt es sich bei der Schicht 1 um einen thermoplastischen Kunststoff. Es ist daher möglich, diese Schicht 1 mit dem Material des Kartenkörpers, welcher in der Regel ebenfalls aus thermoplastischem Kunststoff besteht, zu verschweißen. In diesem Fall ist, sofern ein Thermoschweißverfahren verwendet wird, der thermoplastische Kunststoff für die Schicht 1 so gewählt, dass die Erweichungstemperatur etwa mit der Erweichungstemperatur des Kunststoffs des Kartenkörpers übereinstimmt. Wenn mit anderen Verfahren, beispielsweise Ultraschall-, Hochfrequenz- oder Vibrationsschweißen gearbeitet wird, wird dagegen ein Material für die Schicht 1 des Modulträgers 4 gewählt, das bei ungefähr den gleichen Frequenzen erweicht wie der Kunststoff des Kartenkörpers.

Idealerweise wird diese Schicht 1 des Modulträgers 4 wenn möglich aus dem gleichen Material hergestellt wie der Kartenkörper selbst. In diesem Fall ist eine optimale Verbindung zwischen den Materialien erreichbar. Als Materialien für die Schicht 1 des Modulträgerbands 4 werden vorzugsweise PETG, TPE (Thermoplastisches Elastomer) oder ABS verwendet.

Figur 2 zeigt ein weiteres Ausführungsbeispiel, bei dem das Modulträgerband 5 aus zwei Einzelschichten 1 und 2 besteht. Die an der der leitenden Struktur 7 gegenüberliegenden Unterseite 9 befindliche erste Schicht 1 ist, wie bei dem Ausführungsbeispiel gemäß Figur 1, an das Material des Kartenkörpers angepasst. Die zwischen der leitenden Struktur 7 und dieser ersten Schicht 1 liegende zweite Schicht 2 ist dagegen aus einem Material gewählt, dessen Eigenschaften auf die weitere Verarbeitung als Modulträger abgestimmt ist.

Die Herstellung eines solchen Modulträgerbands 5 kann beispielsweise mittels einer Coextrusionstechnik erfolgen, bei der aus zwei passend zueinander angeordneten Düsen diese Schichten in einem Endlosband direkt übereinander gespritzt werden, wodurch gleichzeitig die Verbindung erfolgt. Anschließend wird die obere Schicht 2 mit der leitenden Struktur 7 versehen.

Für die erste Schicht 1 werden wiederum bevorzugt die Materialien PETG, TPE oder ABS eingesetzt, für die zweite Schicht 2 dagegen vorzugsweise die Materialien PEN, PET oder PC. Als besonders geeignet haben sich folgende Kombinationen erwiesen:

| **Beispiele** | **erste Schicht** | **zweite Schicht** |
|---|---|---|
| Ausführungsbeispiel Nr. 1 | PETG | PEN |
| Ausführungsbeispiel Nr. 2 | PETG | PET |
| Ausführungsbeispiel Nr. 3 | TPE | PEN |
| Ausführungs-Beispiel Nr. 4 | TPE | PET |
| Ausführungsbeispiel Nr. 5 | ABS | PC |

Figur 3 zeigt ein Modulträgerband 6, welches aus drei Schichten 1, 2, 3 aufgebaut ist. Wie bei dem Ausführungsbeispiel gemäß Figur 2 handelt es sich bei der untersten, der leitenden Struktur 7 gegenüberliegenden Unterseite 9 angeordneten ersten Schicht 1 um eine Schicht 1, die auf das Material des Kartenkörpers für die spezielle Verbindungsart abgestimmt ist. Hierbei kann es sich um einen thermoplastischen Kunststoff, vorzugsweise ABS, PVC oder PETG handeln. Ebenso ist wie bei dem Ausführungsbeispiel gemäß Figur 2 die an der leitenden Struktur 7 befindliche zweite Schicht aus einem Material gewählt, dessen Eigenschaften sich besonders gut zur Verarbeitung als Modul eignen.
Bevorzugt werden hierbei die Materialien PEN oder Kapton eingesetzt.

Die mittlere Schicht dient als Verbindungsschicht 3 zwischen der ersten Schicht 1 und der zweiten Schicht 2. Es kann sich hierbei um eine Kleberschicht, beispielsweise um einen Ein- oder Zweikomponenten-Acrylatkleber oder ein Ein- oder Zweikomponenten-PU-System, handeln. Ein solches Modulträgerband 6 kann beispielsweise als Endloslaminatfolienband hergestellt werden, indem die erste Schicht 1 und die zweite Schicht 2 unter Zuführung der Verbindungsschicht 3 zusammengeführt werden und unter Druck miteinander laminiert werden. Anschließend wird dann auf die zweite Schicht 2 die leitende Struktur 7 aufgebracht.

Besonders bevorzugte Kombinationen sind:

| **Beispiele** | **erste Schicht** | **Verbindungsschicht** | **zweite Schicht** |
|---|---|---|---|
| Ausführungsbeispiel Nr.1 | ABS oder PVC oder PETG | Acrylatkleber (1K/2K) | PEN |
| Ausführungsbeispiel Nr. 2 | ABS oder PVC oder PETG | Acrylatkleber (1K/2K) | Kapton |
| Ausführungsbeispiel Nr. 3 | ABS oder PVC oder PETG | PU-Systeme (1K/2K) | PEN oder Kapton |

Ein gemäß einem der vorgenannten Ausführungsbeispiele genanntes Modulband kann wie ein herkömmliches Modulband weiterverarbeitet werden. So kann problemlos ein Chip aufgebracht werden, eine Durchkontaktierung der Aus- und Eingänge des Chips zu den Kontaktflächen 8 der leitenden Struktur 7 hergestellt werden und anschließend der Chip vergossen werden. Anschließend werden dann die einzelnen Module aus dem Modulträgerband 4, 5, 6 herausgelöst, vorzugsweise ausgestanzt.

Es sind also keine weitergehenden Veränderungen in den üblichen Verfahrensabläufen zur Herstellung von Modulen aus einem Modulträgerband erforderlich. Anders als bei den herkömmlichen Fertigungslinien für Datenträgerkarten kann jedoch beim Einbau der fertigen Chipmodule in die Kartenkörper auf die zusätzliche Arbeitsstation der Kleberlaminierung verzichtet werden, wodurch die Fertigungslinie gegenüber den herkömmlichen Fertigungslinien vereinfacht und kostengünstiger wird.

## Patentansprüche

1. Verfahren zur Herstellung eines Moduls zum Einbau in einen Kartenkörper, wobei ein Modulträger (4, 5, 6) auf einer Seite mit einer leitenden Struktur (7) versehen wird, **dadurch gekennzeichnet, dass** bei der Herstellung des Modulträgers zumindest eine an der der leitenden Struktur (7) gegenüberliegenden Unterseite (9) befindliche erste Schicht (1) des Modulträgers (4, 5, 6) aus einem thermoplastischen Kunststoff hergestellt wird, dessen Eigenschaften zumindest insoweit auf eine beim Einbau des Moduls mit der ersten Schicht (1) des Modulträgers (4, 5, 6) zu verbindende, aus thermoplastischem Kunststoff bestehende Materialschicht des Kartenkörpers abgestimmt sind, dass die Kunststoffe zumindest einen ähnlichen Erweichungsparameter aufweisen.

2. Verfahren nach Anspruch 1, **dadurch gekennzeichnet, dass** die erste Schicht (1) des Modulträgers (4, 5, 6) aus dem gleichen Material hergestellt wird wie die beim Einbau des Moduls mit dieser ersten Schicht (1) zu verbindende Materialschicht des Kartenkörpers.

3. Verfahren nach Anspruch 1 oder 2, **dadurch gekennzeichnet, dass** der Modulträger (4) einschichtig hergestellt wird.

4. Verfahren nach Anspruch 1 oder 2, **dadurch gekennzeichnet, dass** der Modulträger (5, 6) mindestens zweischichtig hergestellt wird, so dass sich zwischen der ersten Schicht (1) und der leitenden Struktur (7) eine zweite Schicht (2) aus einem Material befindet, dessen Eigenschaften auf eine weitere Verarbeitung des Modulträgers (5, 6) abgestimmt sind.

5. Verfahren nach Anspruch 4, **dadurch gekennzeichnet, dass** die erste (1) und die zweite Schicht (2) über zumindest eine Verbindungsschicht (3) miteinander verbunden werden.

6. Verfahren nach einem der Ansprüche 1 bis 5, **dadurch gekennzeichnet, dass** zunächst ein Modulband mit einem Modulträgerband und darauf angeordneten leitenden Strukturen für mehrere Module hergestellt wird, wobei die erste Schicht bereits bei der Herstellung des Modulträgerbands miterzeugt wird, und dieses Modulband weiterverarbeitet wird und schließlich die einzelnen Module aus dem Modulträger herausgelöst werden.

7. Verfahren nach Anspruch 6, **dadurch gekennzeichnet, dass** ein mehrschichtiges Modulträgerband mittels einer Coextrusionstechnik hergestellt wird.

8. Verfahren nach Anspruch 6, **dadurch gekennzeichnet, dass** ein mehrschichtiges Modulträgerband mittels einer Laminiertechnik hergestellt wird.

9. Modul zum Einbau in einen Kartenkörper, mit einem Modulträger (4, 5, 6), welcher auf einer Seite eine leitende Struktur (7) aufweist, **dadurch gekennzeichnet, dass** der Modulträger (4, 5, 6) zumindest an der der leitenden Struktur (7) gegenüberliegenden Unterseite (9) aus einem thermoplastischen Material besteht, dessen Eigenschaften zumindest insoweit auf eine beim Einbau des Moduls mit dem Modulträger (4, 5, 6) zu verbindende, aus thermoplastischem Kunststoff bestehende Materialschicht des Kartenkörpers abgestimmt sind, dass die Kunststoffe einen ähnlichen Erweichungsparameter aufweisen.

10. Modul nach Anspruch 9, **dadurch gekennzeichnet, dass** der Modulträger (4, 5, 6) an der der leitenden Struktur (7) gegenüberliegenden Unterseite (9) aus dem gleichen Material besteht wie die beim Einbau mit dem Modulträger (4, 5, 6) zu verbindende Materialschicht des Kartenkörpers.

11. Modul nach Anspruch 9 oder 10, **dadurch gekennzeichnet, dass** der Modulträger (4) aus einer einzelnen Schicht besteht.

12. Modul nach Anspruch 9 oder 10, **dadurch gekennzeichnet, dass** der Modulträger (5, 6) mindestens zweischichtig ist und zwischen der ersten Schicht (1) und der leitenden Struktur (7) eine zweite Schicht (2) aus einem Material aufweist, dessen Eigenschaften auf eine weitere Verarbeitung des Modulträgers (5, 6) abgestimmt sind.

13. Modul nach Anspruch 12, **dadurch gekennzeichnet, dass** die erste (1) und die zweite Schicht (2) über zumindest eine Verbindungsschicht (3) miteinander verbunden sind.

14. Verfahren zum Einbau eines Moduls in einen Kartenkörper, **dadurch gekennzeichnet, dass** ein Modul gemäß einem Verfahren nach einem der Ansprüche 9 bis 13 hergestellt wird und dieses Modul mit dem Kartenkörper verschweißt wird.

15. Verfahren nach Anspruch 14, **dadurch gekennzeichnet, dass** das Modul mittels eines Thermo-, Ultraschall-, Hochfrequenz- oder Vibrationsschweißverfahrens mit dem Kartenkörper verschweißt wird.

16. Datenträgerkarte mit einem Kartenkörper und einem darin eingeschweißten Modul nach einem der Ansprüche 9 bis 13.

## Claims

1. A method for producing a module to be incorporated in a card body wherein a module carrier (4, 5, 6) is provided with a conductive structure (7) on one side, **characterized in that** during production of the module carrier at least a first layer (1) of the module carrier (4, 5, 6) located on the underside (9) opposite the conductive structure (7) is produced from a thermoplastic whose properties are adjusted to a layer of material of the card body consisting of thermoplastic to be connected with the first layer (1) of the module carrier (4, 5, 6) upon incorporation of the module at least to the extent that the plastics at least have a similar softening parameter.

2. A method according to claim 1, **characterized in that** the first layer (1) of the module carrier (4, 5, 6) is produced from the same material as the layer of material of the card body to be connected with said first layer (1) upon incorporation of the module.

3. A method according to claim 1 or 2, **characterized in that** the module carrier (4) is produced of a single layer.

4. A method according to claim 1 or 2, **characterized in that** the module carrier (5, 6) is produced of at least two layers, so that between the first layer (1) and the conductive structure (7) there is a second layer (2) of a material whose properties are adjusted to further processing of the module carrier (5, 6).

5. A method according to claim 4, **characterized in that** the first layer (1) and second layer (2) are interconnected by at least one connection layer (3).

6. A method according to any of claims 1 to 5, **characterized in that** first a module tape with a module carrier tape and conductive structures disposed thereon for a plurality of modules is produced, the first layer already being produced as well during production of the module carrier tape, and said module tape is further processed and finally the individual modules detached from the module carrier.

7. A method according to claim 6, **characterized in that** a multilayer module carrier tape is produced by a coextrusion technique.

8. A method according to claim 6, **characterized in that** a multilayer module carrier tape is produced by a laminating technique.

9. A module to be incorporated in a card body with a module carrier (4, 5, 6) having a conductive structure (7) on one side, **characterized in that** the module carrier (4, 5, 6) consists, at least on the underside (9) opposite the conductive structure (7), of a thermoplastic material whose properties are adjusted to a layer of material of the card body consisting of thermoplastic to be connected with the module carrier (4, 5, 6) upon incorporation of the module at least to the extent that the plastics have a similar softening parameter.

10. A module according to claim 9, **characterized in that** the module carrier (4, 5, 6) consists, on the underside (9) opposite the conductive structure (7), of the same material as the layer of material of the card body to be connected with the module carrier (4, 5, 6) upon incorporation.

11. A module according to claim 9 or 10, **characterized in that** the module carrier (4) consists of a single layer.

12. A module according to claim 9 or 10, **characterized in that** the module carrier (5, 6) has at least two layers, having between the first layer (1) and the conductive structure (7) a second layer (2) of a material whose properties are adjusted to further processing of the module carrier (5, 6).

13. A module according to claim 12, **characterized in that** the first layer (1) and second layer (2) are interconnected by at least one connection layer (3).

14. A method for incorporating a module in a card body, **characterized in that** a module is produced by a method according to any of claims 9 to 13 and this module is welded to the card body.

15. A method according to claim 14, **characterized in that** the module is welded to the card body by a thermal, ultrasonic, high-frequency or vibration welding process.

16. A data carrier card having a card body and a module welded therein according to any of claims 9 to 13.

## Revendications

1. Procédé pour fabriquer un module à monter dans un corps de carte, un support de module (4, 5, 6) étant pourvu sur un côté d'une structure conductrice (7), **caractérisé en ce que** lors de la fabrication du support de module au moins une première couche (1) du support de module (4, 5, 6) se trouvant sur la face inférieure (9) située à l'opposé de la structure conductrice (7) est fabriquée en matière thermoplastique dont les propriétés concordent au moins sur ce point avec une couche en matière thermoplastique du corps de carte, couche à relier à la première couche (1) du support de module (4, 5, 6) lors du montage du module, et **en ce que** les matières plastiques comportent au moins un paramètre de ramollissement semblable.

2. Procédé selon la revendication 1, **caractérisé en ce que** la première couche (1) du support de module (4, 5, 6) est fabriquée dans le même matériau que la couche de matière du corps de carte à relier à cette première couche (1) lors du montage du module.

3. Procédé selon la revendication 1 ou 2, **caractérisé en ce que** le support de module (4) est fabriqué en une seule couche.

4. Procédé selon la revendication 1 ou 2, **caractérisé en ce que** le support de module (5, 6) est fabriqué au moins en deux couches de sorte qu'entre la première couche (1) et la structure conductrice (7) se trouve une seconde couche (2) en une matière dont les propriétés concordent avec un façonnage supplémentaire du support de module (5, 6).

5. Procédé selon la revendication 4, **caractérisé en ce que** la première (1) et la seconde couche (2) sont reliées ensemble par au moins une couche de liaison (3).

6. Procédé selon l'une des revendications 1 à 5, **caractérisé en ce qu'**une bande modulaire avec une bande de support de module et des structures conductrices disposées dessus est fabriquée avant tout pour plusieurs modules, sachant que la première couche est déjà coproduite lors de la fabrication de la bande du support de module, et cette bande modulaire subit une transformation ultérieure et finalement chaque module est enlevé du support de module.

7. Procédé selon la revendication 6, **caractérisé en ce qu'**une bande de support de module à couches multiples est fabriquée au moyen d'une technique de co-extrusion.

8. Procédé selon la revendication 6, **caractérisé en ce qu'**une bande de support de module à couches multiples est fabriquée au moyen d'une technique de laminage.

9. Module à monter dans un corps de carte avec un support de module (4, 5, 6), lequel comporte sur un côté une structure conductrice (7), **caractérisé en ce que** le support de module (4, 5, 6) se compose d'une matière thermoplastique au moins sur la face inférieure (9) située à l'opposé de la structure conductrice (7), matière dont les propriétés concordent au moins sur ce point avec une couche de matière du corps de carte, couche à relier avec le support de module (4, 5, 6) lors du montage du module, et **en ce que** les matières plastiques comportent un paramètre de ramollissement semblable.

10. Module selon la revendication 9, **caractérisé en ce que** le support de module (4, 5, 6) se compose sur la face inférieure (9) située à l'opposé de la structure conductrice (7) du même matériau que la couche de matière du corps de carte à relier avec le support de module (4, 5, 6) lors du montage.

11. Module selon la revendication 9 ou 10, **caractérisé en ce que** le support de module (4) se compose d'une seule couche.

12. Module selon la revendication 9 ou 10, **caractérisé en ce que** le support de module (5, 6) a au moins deux couches et comporte entre la première couche (1) et la structure conductrice (7) une seconde couche (2) en une matière dont les propriétés concordent avec un façonnage supplémentaire du support de module (5, 6).

13. Module selon la revendication 12, **caractérisé en ce que** la première (1) et la seconde couche (2) sont reliées ensemble par au moins une couche de liaison (3).

14. Procédé pour monter un module dans un corps de carte, **caractérisé en ce qu'**un module est fabriqué selon un procédé selon l'une des revendications 9 à 13 et ce module est soudé sur ce corps de carte.

15. Procédé selon la revendication 14, **caractérisé en ce que** le module est soudé sur le corps de carte au moyen d'un procédé de soudage thermique, à ultrasons, à haute fréquence ou par vibration.

16. Carte de support de données avec un corps de carte et un module soudé à l'intérieur selon l'une des revendications 9 à 13.
